# EUROPÄISCHE PATENTSCHRIFT

(11) **EP 1 316 487 B1**
(45) Veröffentlichungstag und Bekanntmachung des Hinweises auf die Patenterteilung: **11.01.2006**
(21) Anmeldenummer: 02025823.2
(22) Anmeldetag: 18.11.2002
(51) Int. Cl.: B60S 3/06, B08B 1/04, B05B 15/06

(54) **Entstaubungsanlage für Fahrzeugkarossen**
Dust removal installation for vehicle bodies
Installation de dépoussièrage pour carosserie de véhicule

(30) Priorität: 28.11.2001 DE 10158129
(43) Veröffentlichungstag der Anmeldung: 04.06.2003
(73) Patentinhaber: Dürr Systems GmbH, 70435 Stuttgart (DE)
(72) Erfinder: Walter, Martin, 74379 Ingersheim (DE); Rasch, Harald, 70435 Stuttgart (DE); Hezel, Thomas, 71679 Asperg (DE)
(74) Vertreter: Heusler, Wolfgang

(56) Entgegenhaltungen:
- EP-A- 0 541 811
- DE-A- 4 339 613
- DE-C- 4 238 518
- PATENT ABSTRACTS OF JAPAN Bd. 014, Nr. 510 (M-1045), 8. November 1990 (1990-11-08) -& JP 02 212066 A (HONDA MOTOR CO LTD), 23. August 1990 (1990-08-23)

## Beschreibung

Die Erfindung betrifft eine Entstaubungsanlage nach dem Oberbegriff des Anspruchs 1.

In Beschichtungsanlagen für die Serienbeschichtung von Fahrzeugkarossen müssen diese vor der Beschichtung von Staub- und Schmutzpartikeln gereinigt werden. Zu diesem Zweck werden die Karossen bekanntlich durch eine Entstaubungsanlage gefördert, die üblicherweise eine horizontale Dachwalze und ein oder zwei Walzenpaare für die unteren und oberen Seitenflächen der Karossen enthält, wobei untere Seitenwalzen vertikal und obere Seitenwalzen schräg angeordnet sein können (US,4777687 und 4689749; DÜRR/BEHR Technisches Handbuch 04/1999). Die rotierenden Walzen sind vorzugsweise mit Straußenfedern besetzt, die besonders gute elektrostatische Eigenschaften haben. Zur Entstaubung der Karossen streichen die Federn der rotierenden Walzen mit geringem Druck über die Karossenflächen, wobei die Staubteilchen durch elektrostatische Ladungseffekte von den Federn aufgenommen werden. Die rotierenden Federwalzen können die mit Staubpartikeln behafteten Federn in eine in den Walzengehäusen eingebaute Ionisationsluftschleuse zur Neutralisierung der Federn transportieren, aus der die Staubpartikel dann abgesaugt werden.

Eine gattungsgemäße Entstaubungsanlage ist aus dem Dokument DE-A-4 339 613 bekannt.

Die Seitenwalzen der üblichen Entstaubungsanlagen sind zweiachsig, d.h. mit zwei Freiheitsgraden verstellbar: Sie sind längs der Längsrichtung des Armes bis zur Anlage an der Karosse verschiebbar und zur Anpassung an die Karossenform um eine horizontale Achse kippbar. Die Kippbarkeit ermöglicht nur eine relativ grobe Anpassung der Walzenstellung an die unterschiedlichen Formen der zu reinigenden Karossen. Eine weitergehende Anpassung wird nur in begrenztem Maße durch die Nachgiebigkeit der Walzenfedern beim Andrücken der Walze erreicht. Insbesondere bei stark gerundeten Seitenflächen ergibt sich damit keine optimale Reinigung.

Eine Möglichkeit zur Lösung dieses Problems besteht darin, die Federwalze mit einem innerhalb der Kabine ggf. verfahrbar angeordneten Roboter üblicher Art über die Karossenseitenfläche zu führen. Abgesehen von der kaum zu verhindernden Verschmutzung des gesamten Roboters während des Reinigungsbetriebes kann diese Lösung aber wegen des im Vergleich mit den konventionellen Entstaubungsanlagen größeren Platzbedarfes der Roboter in der Kabine unzweckmäßig sein. Die Kabinenbreite kann insbesondere den Kostenaufwand erheblich vergrößern. Ein solcher Roboter ist aus dem Dokument DE-4238518C bekannt.

Der Erfindung liegt die Aufgabe zugrunde, eine automatische Entstaubungsanlage anzugeben, mit der soweit wie möglich eine ständige Linienberührung zwischen der Reinigungswalze und der Karossenseitenfläche erreichbar ist, ohne dass eine im Bereich der Walzen unerwünscht breite Kabine erforderlich ist.

Diese Aufgabe wird durch die in den Patentansprüchen gekennzeichnete Entstaubungsanlage gelöst.

Durch die drei frei programmierbar angetriebenen Achsen des demgemäß vorgesehenen Gelenks, deren Achslinien einander jeweils senkrecht in einem Punkt schneiden oder wenigstens in der Nähe eines gemeinsamen Punktes quer zueinander verlaufen können, wird eine ständige Linienberührung der Walzen im dreidimensionalen Raum ermöglicht, so dass alle durch die Karossenform vorgegebenen Konturen erreicht werden können, ohne dass auf jeder Seite der Karossen innerhalb der Kabine ein Roboter installiert werden muss.

An dem in der Zeichnung dargestellten Ausführungsbeispiel wird die Erfindung näher erläutert. Es zeigen
- Fig. 1: einen Teil der Entstaubungsanlage mit zwei einander gegenüberliegenden Seitenwalzen; und
- Fig. 2: eine vergrößerte Ansicht zur Erläuterung der Walzenlagerung.

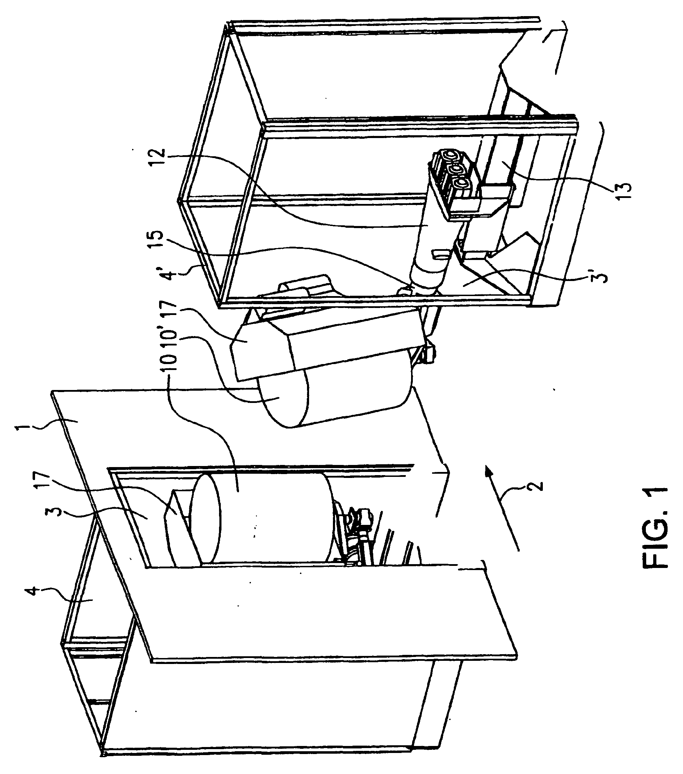

In Fig. 1 ist die eine Seitenwand 1 einer Kabine angedeutet, durch die die zu reinigenden Karossen in Richtung des Pfeils 2 gefördert werden. Außerhalb der Kabine befindet sich hinter einer Öffnung 3 der Seitenwand 1 eine geschlossene Kasten- oder Rahmenkonstruktion 4, in der ein Teil der Lagerung einer Vogelfederwalze 10 an sich üblicher Art untergebracht ist. Die gleiche Anordnung mit einer (offen und ohne Kabinenwand dargestellten) Rahmenkonstruktion 4' und der zweiten Vogelfederwalze 10' befindet sich auf der gegenüberliegenden Kabinenseite.

Darstellungsgemäß ist in der Rahmenkonstruktion 4 bzw. 4' außerhalb der Kabinenwand ein Arm 12 horizontal quer zu der Förderrichtung (Pfeil 2) verschiebbar gelagert, beispielsweise teleskopartig auf einer Schiene 13. Die Verschiebung kann durch einen automatisch gesteuerten Antrieb und/oder manuell durchgeführt werden. Die Walze 10' ist in einer Lage dargestellt, in der sie von ihrem sich durch die Öffnung 3' der Kabinenwand erstreckenden Arm 12 in das Kabineninnere geschoben ist, während die andere Walze 10 in einer zurückgezogenen Lage dargestellt ist, in der sie teilweise oder ganz durch die Öffnung 3 hindurch aus der Kabine herausbewegt werden kann.

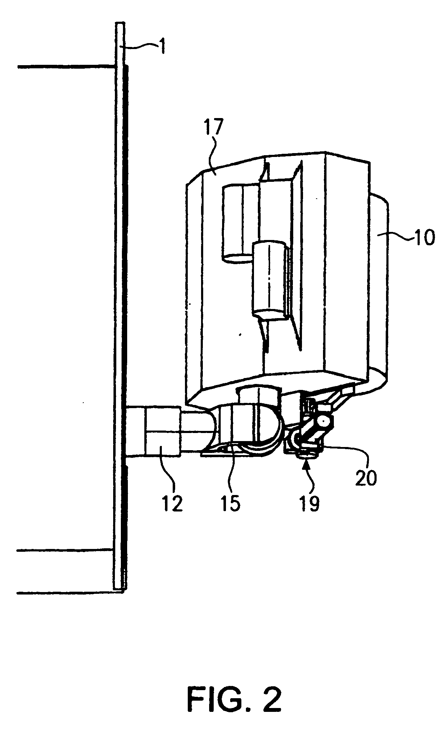

An seinem freien vorderen Ende ist an dem Arm 12 ein dreiachsiges Gelenk 15 angeordnet, das genauer in Fig. 2 erkennbar ist. An dem Gelenk 15 ist ein Gehäusekörper 17 montiert, in dem die Walze 10 bzw. 10' um eine zu der Achslinie der letzten Achse des Gelenks parallele Achse drehbar gelagert ist. Die Walzen 10, 10' werden jeweils von einem an dem Gehäusekörper 17 befestigten Motor 20 in Rotation versetzt. Die Rotationsachse der Walze 10 ist durch den Pfeil 19 angedeutet.

Bei dem Gelenk 15 kann es sich um ein an sich konventionelles Handgelenk handeln, wie es beispielsweise bei Lackier- oder sonstigen Robotern üblich ist. Die verschiedenen Achslinien solcher Gelenke treffen sich typisch in einem gemeinsamen Punkt oder in dessen Nähe. Gemäß der schematischen Darstellung in Fig. 2, die den Arm 12 mit der in die Kabine geschobenen Walze 10 zeigt, sind der Gehäusekörper 17 und damit die Walze 10 erstens um die horizontale Armlängsachse drehbar, zweitens um eine quer hierzu liegende horizontale Achse schwenkbar und drittens um eine die letzte Gelenkachse bildende, bei dem dargestellten Beispiel vertikale Achse verdrehbar (mit "Achsen" werden entsprechend der üblichen Roboterterminologie die Freiheitsgrade des Handgelenks bezeichnet). Infolge dessen kann die Walze um einen gedachten Punkt horizontal verdreht, nach vorne in Richtung zur Karosse gekippt und gleichzeitig zur Seite geneigt werden. Antriebswellen für die drei Achsen des Gelenkes verlaufen durch den hohl ausgebildeten Arm 12.

Der Gehäusekörper 17 kann am Umfang der Walze 10 bzw. 10' eine Absaugeinrichtung bilden oder enthalten, von der ein (nicht dargestellter) Absaugschlauch durch die Öffnung 3 bzw. 3' in die Rahmenkonstruktion 4 bzw. 4' führt.

Die Öffnungen 3 und 3' sind im Betrieb zweckmäßig durch eine den Arm 12 und ggf. den Absaugschlauch umgebende Abdeckeinrichtung (nicht dargestellt) verschlossen, beispielsweise durch eine der bei Beschichtungsmaschinen üblichen Abdeckbandkonstruktionen, so dass der in der Rahmenkonstruktion 4, 4' befindliche Teil der Anlage vor Verschmutzung geschützt ist.

Die hier beschriebene Entstaubungsanlage kann außer den Walzen 10 und 10' und der üblichen (nicht dargestellten) Dachwalze ein weiteres Walzenpaar enthalten, wobei dann beispielsweise die dargestellten Walzen 10, 10' die oberen Seitenflächenbereiche der Karossen und die beiden Walzen des anderen Paares die unteren Seitenflächenbereiche überstreichen können. Die zusätzlichen Walzen können entweder konventionell oder ebenfalls in der hier beschriebenen Weise dreiachsig bewegbar gelagert sein. Die Arme 12 und/oder die an ihnen gelagerten Seitenwalzen können in nicht dargestellter Weise auch vertikal auf- und abbewegbar sein. In an sich bekannter Weise können die verschiedenen vorhandenen Walzen oder Walzenpaare längs der Förderrichtung (Pfeil 2) versetzt angeordnet sein.

Die nicht dargestellte Programmsteuereinrichtung für die frei programmierbaren Walzenbewegungen ist z.B. aus der Robotersteuertechnik bekannt und bedarf daher keiner Beschreibung.

## Patentansprüche

1. Entstaubungsanlage für zu beschichtende, vor der Beschichtung serienweise in einer Kabine durch die Entstaubungsanlage geförderte Werkstücke wie insbesondere Fahrzeugkarossen, mit insbesondere mit Vogelfedern bestückten rotierenden verstellbaren Reinigungswalzen (10, 10'), die in der Kabine auf den beiden Seiten des Förderweges (2) der Werkstücke derart angeordnet sind, dass sie mindestens einen Teilbereich der ihnen zugewandten Seitenfläche der Werkstücke erreichen,
und mit einer Programmsteuereinrichtung zum selbsttätigen freiprogrammierbaren Verstellen der Reinigungswalzen (10, 10'),
**dadurch gekennzeichnet, dass** die beiden Reinigungswalzen (10, 10') jeweils an einem mindestens dreiachsigen programmgesteuert bewegbaren Gelenk (15) gelagert sind,
und dass das dreiachsige Gelenk (15) am einen Ende eines Armes (12) angebracht ist, der in einer Lage angeordnet ist oder in eine Lage bewegbar ist, in der er sich durch eine Öffnung (3) der Kabinenwand (1) erstreckt, und der Arm (12) mit seinem anderen Ende außerhalb der Kabine gelagert ist.

2. Entstaubungsanlage nach Anspruch 1, **dadurch gekennzeichnet, dass** die Achslinien der drei Bewegungsachsen des Gelenks (15) in der Nähe eines gemeinsamen Punktes quer zueinander verlaufen oder einander in einem Punkt schneiden.

3. Entstaubungsanlage nach Anspruch 1 oder 2, **dadurch gekennzeichnet, dass** die Achslinie der ersten Gelenkachse auf der Längsachse des Armes (12) liegt.

4. Entstaubungsanlage nach einem der Ansprüche 1 bis 3, **dadurch gekennzeichnet, dass** das Gelenk (15) längs der Längsrichtung des Armes (12) verschiebbar ist.

5. Entstaubungsanlage nach einem der vorhergehenden Ansprüche, bei der am Umfang der Reinigungswalze (10) eine an einen Absaugschlauch angeschlossene Absaugeinrichtung (17) angeordnet ist, **dadurch gekennzeichnet, dass** der Absaugschlauch durch die Öffnung (3) der Kabinenwand (1) hindurchgeführt ist, wenn sich die Walze (10) in der Kabine befindet.

6. Entstaubungsanlage nach einem der vorhergehenden Ansprüche, **dadurch gekennzeichnet, dass** die Reinigungswalze (10) in einem an dem Gelenk (15) gelagerten Gehäusekörper (17) drehbar gelagert ist.

7. Entstaubungsanlage nach einem der vorhergehenden Ansprüche, **dadurch gekennzeichnet, dass** die Reinigungswalze (10) durch die Öffnung (3) der Kabinenwand (1) hindurch bewegbar ist.

8. Entstaubungsanlage nach einem der vorhergehenden Ansprüche, **dadurch gekennzeichnet, dass** die Öffnung (3) der Kabinenwand (1) durch eine den Arm (12) und ggf. den Absaugschlauch umgebende Abdeckeinrichtung verschlossen oder verschließbar ist.

9. Entstaubungsanlage nach einem der vorhergehenden Ansprüche, **dadurch gekennzeichnet, dass** der Arm (12) vertikal verschiebbar ist.

10. Entstaubungsanlage nach einem der vorhergehenden Ansprüche, **dadurch gekennzeichnet, dass** Antriebswellen der drei Gelenkachsen durch den Arm (12) hindurch verlaufen.

11. Entstaubungsanlage nach einem der vorhergehenden Ansprüche, **dadurch gekennzeichnet, dass** die Walze (10, 10') um eine zu ihrer Rotationsachse (19) parallele Achslinie einer der Gelenkachsen verdrehbar ist.

## Claims

1. Dust removal apparatus for workpieces, such as vehicle bodies, which are to be coated and are conveyed serially in a booth through the dust collection apparatus, with rotating adjustable cleaning rollers (10, 10') which are in particularly equipped with bird feathers and are disposed in the booth on both sides of the conveying path (2) of the workpieces in such a way that they reach at least a partial area of the lateral surface of the workpieces facing them, and with a program control device for automatic freely-programmable adjustment of the cleaning rollers (10, 10'), **characterised in that** the two cleaning rollers (10, 10') are mounted on a joint (15) with at least three axes which is movable under program control, and that the three-axis joint (15) is attached to one end of an arm (12) which is disposed in a position or is movable into a position in which it extends through an opening (3) in the wall (1) of the booth, and the arm (12) is mounted with its other end outside the booth.

2. Dust removal apparatus as claimed in Claim 1, **characterised in that** the axial lines of the three axes of movement of the joint (15) extend transversely with respect to one another in the vicinity of a common point or intersect at a point.

3. Dust removal apparatus as claimed in Claim 1 or 2, **characterised in that** the axial line of the first joint axis lies on the longitudinal axis of the arm (12).

4. Dust removal apparatus as claimed in any one of Claims 1 to 3, **characterised in that** the joint (15) is displaceable along the longitudinal direction of the arm (12).

5. Dust removal apparatus as claimed in any one of the preceding claims, in which an extraction arrangement (17) connected to an extraction hose is disposed on the circumference of the cleaning roller (10), **characterised in that** extraction hose is passed through the opening (3) in the wall (1) of the booth if the roller (10) is located in the booth.

6. Dust removal apparatus as claimed in any one of the preceding claims, **characterised in that** the cleaning roller (10) is rotatably mounted in a housing member (17) mounted on the joint (15).

7. Dust removal apparatus as claimed in any one of the preceding claims, **characterised in that** the cleaning roller (10) is movable through the opening (3) in the wall (1) of the booth.

8. Dust removal apparatus as claimed in any one of the preceding claims, **characterised in that** the opening (3) in the wall (1) of the booth is closed or closable by a cover arrangement surrounding the arm (12) and possibly the extraction hose.

9. Dust removal apparatus as claimed in any one of the preceding claims, **characterised in that** the arm (12) is vertically displaceable.

10. Dust removal apparatus as claimed in any one of the preceding claims, **characterised in that** drive shafts of the three joint axes extend through the arm (12).

11. Dust removal apparatus as claimed in any one of the preceding claims, **characterised in that** the roller (10, 10') is rotatable about axial line of one of the joint axes which is parallel the axis of rotation (19) thereof.

## Revendications

1. Installation de dépoussiérage pour des pièces à recouvrir, transportées avant le revêtement en série dans une cabine à travers l'installation de dépoussiérage, telles qu'en particulier des carrosseries de véhicule, avec en particulier des cylindres de nettoyage (10, 10') réglables tournants et équipés de plumes d'oiseau, lesquels sont disposés dans la cabine des deux côtés de la voie de transport (2) des pièces, de manière à atteindre au moins une zone partielle de la surface latérale des pièces qui est tournée vers eux, et comportant un dispositif de commande de programme pour le réglage librement programmable et automatique des cylindres de nettoyage (10, 10'), **caractérisée en ce que** les deux cylindres de nettoyage (10, 10') sont montés chacun sur une articulation (15) commandée par programme, à au moins trois axes, et **en ce que** l'articulation à trois axes (15) est placée à une extrémité d'un bras (12) qui est disposée dans une position ou déplaçable dans une position dans laquelle il s'étend à travers une ouverture (3) de la paroi (1) de la cabine, et le bras (12) est monté par son autre extrémité à l'extérieur de la cabine.

2. Installation de dépoussiérage selon la revendication 1, **caractérisée en ce que** les lignes des trois axes de déplacement de l'articulation (15) s'étendent à proximité d'un point commun, transversalement les unes aux autres, ou se coupent en un point.

3. Installation de dépoussiérage selon la revendication 1 ou 2, **caractérisée en ce que** la ligne du premier axe d'articulation se situe sur l'axe longitudinal du bras (12).

4. Installation de dépoussiérage selon l'une des revendications 1 à 3, **caractérisée en ce que** l'articulation (15) peut coulisser le long de la direction longitudinale du bras (12).

5. Installation de dépoussiérage selon l'une des revendications précédentes dans laquelle, sur la circonférence du cylindre de nettoyage (10), est disposé un dispositif d'aspiration (17) raccordé à un tuyau d'aspiration, **caractérisée en ce que** le tuyau d'aspiration est guidé à travers l'ouverture (3) de la paroi de la cabine lorsque le cylindre (10) se trouve dans la cabine.

6. Installation de dépoussiérage selon l'une des revendications précédentes, **caractérisée en ce que** le cylindre de nettoyage (10) est monté tournant dans un corps de carter (17) monté sur l'articulation (15).

7. Installation de dépoussiérage selon l'une des revendications précédentes, **caractérisée en ce que** le cylindre de nettoyage (10) est déplaçable à travers l'ouverture (3) de la paroi (1) de la cabine.

8. Installation de dépoussiérage selon l'une des revendications précédentes, **caractérisée en ce que** l'ouverture (3) de la paroi (1) de la cabine est fermée ou peut être fermée par un dispositif de recouvrement entourant le bras (12) et éventuellement le tuyau d'aspiration.

9. Installation de dépoussiérage selon l'une des revendications précédentes, **caractérisée en ce que** le bras (12) peut coulisser verticalement.

10. Installation de dépoussiérage selon l'une des revendications précédentes, **caractérisée en ce que** des arbres d'entraînement des trois axes d'articulation s'étendent à travers le bras (12).

11. Installation de dépoussiérage selon l'une des revendications précédentes, **caractérisée en ce que** le cylindre (10, 10') peut tourner autour d'une ligne d'axe, parallèle à son axe de rotation (19), de l'un des axes d'articulation.
